# EUROPEAN PATENT APPLICATION

(11) **EP 2 123 450 A1**
(43) Date of publication of application: **25.11.2009**
(21) Application number: 09159714.6
(22) Date of filing: 07.05.2009
(51) Int. Cl.: B32B 27/08, B32B 29/00, D21H 19/00

(54) **Enhance performance on current renewable film using functional polymer coatings**

(30) Priority: 19.05.2008 US 54260 P; 30.04.2009 US 433092
(71) Applicant: Honeywell International Inc., Morristown, NJ 07962 (US)
(72) Inventor: Ting, Yuan-Ping R., Plainsboro, NJ 08536 (US); Porter, Simon J., Allentown, PA 18104 (US); Del Priore, Alex V., Center Valley, PA 18034 (US)
(74) Representative: Buckley, Guy Julian

(57) **Abstract**

High barrier multilayer films incorporating a biodegradable polymer layer. More particularly, biodegradable multilayer films for use as book coverings and packaging materials. The multilayer films have excellent moisture barrier and curl resistance properties.

## Description

### CROSS REFERENCE TO RELATED APPLICATION

This application claims the benefit of U.S. provisional patent application No. 61/054,260 filed on May 19, 2008, which is incorporated herein by reference in its entirety.

### BACKGROUND OF THE INVENTION

### FIELD OF THE INVENTION

The present invention relates to high barrier multilayer films incorporating a biodegradable polymer layer. More particularly, the invention pertains to biodegradable multilayer films for use as book coverings and packaging materials. The multilayer films incorporate a biodegradable polymer layer and have excellent barrier properties.

### DESCRIPTION OF THE RELATED ART

A wide variety of polymers and films formed from such polymers are known. Important physical characteristics of such films include its barrier properties, including barriers to gas, aroma, and/or vapor such as water vapor, as well as its physical characteristics, such as toughness, wear and weathering resistances, and light-transmittance. It is also well known to manufacture polymeric film articles for use in a wide array of applications, such as packaging applications. Many such articles are made of multiple layers of different plastics in order to achieve various desired physical and chemical properties.

Conventionally, synthetic polymers such as polyethylene ("PE"), polypropylene ("PP") and polyethylene terephthalate ("PET"), etc. are widely used as materials for manufacturing multilayer packaging materials for containing various objects. After use, disposal of the used packaging materials frequently leads to their being sent to a facility where they are decomposed by incineration at high temperatures. However, the incineration of such synthetic polymers typically generates substances that contaminate the air and pollute the environment. These materials are also high in heat buildup when burned and there is a possibility of damaging the incinerator during burning treatment. Other materials, such as polyvinyl chlorides, cannot be burned because they have self-extinguishing properties. One common means to ameliorate this problem is by recycling and reusing the materials, but recycling can be very expensive and often is not economically feasible. Such synthetic polymer materials that are disposed without being incinerated or recycled typically are buried in landfills and generally do not decompose, permanently taking up space as waste.

In view of these issues, biodegradable polymers and products formed therefrom are becoming increasingly important. Biodegradable polymers are typically produced from annually renewable resources, such as corn or sugarcane, and may be naturally produced, modified naturally produced or synthetically produced. One particularly desirable family of biodegradable polymers is polylactic acids ("PLAs"), also referred to as polylactides. PLAs are synthetic aliphatic polyesters derived from renewable resources. Bacterial fermentation of corn starch or sugarcane produces lactic acid which is then condensation polymerized to form PLA.

Polylactic acids are desirable because their heat buildup during burning is less than half that of polyethylene and they are naturally decomposed in soil or water. However, other less desirable properties limit the broad market entry of PLAs and other biodegradable polymers in plastics industries compared to a conventional polymer such as polyethylene or polystyrene. For example, polylactides and other biodegradable polymers such as polyhydroxyalkanoates ("PHAs") have poor gas and moisture barrier properties and are not well suited for use as packaging materials or in other applications where a high barrier to gas and/or moisture is desired. Films produced from such annually renewable materials tend to be noisy when deformed and many compositions that have excellent degradability have only limited processability. Additionally, films produced from annually renewable materials currently have limited use as flexible packaging materials because of their tendency to easily tear and crack, in addition to their poor gas and moisture barrier properties.

Accordingly, there is a need for environmentally friendly multilayer film structures having good processability, a high barrier to gas and moisture transmission, and preferably reduced noise when deformed. The present application provides a solution to this need.

### SUMMARY OF THE INVENTION

The invention provides a multilayer article comprising, in order:
a) a curl resistant outer protective layer;
b) a biodegradable polymer layer;
c) an optional intermediate adhesive primer layer;
d) an optional moisture barrier layer having a moisture vapor transmission rate of from about 0.5 grams/100 in² (645.16 cm²) per day to about 45 g/100in² per day;
e) an adhesive tie layer; and
f) a paper substrate.

The invention also provides a multilayer film comprising, in order:
a) a biodegradable polymer layer;
b) an optional intermediate adhesive primer layer; and
c) a moisture barrier layer having a moisture vapor transmission rate of from about 0.5 grams/100 in² (645.16 cm²) per day to about 45 g/100in² per day; said moisture barrier layer comprising a thermoplastic polymer combined with a nanometer scale clay.

The invention further provides a package formed from a multilayer film, the film comprising, in order:
a) a biodegradable polymer layer;
b) an optional intermediate adhesive primer layer; and
c) a moisture barrier layer having a moisture vapor transmission rate of from about 0.5 grams/100 in² (645.16 cm²) per day to about 45 g/100in² per day; wherein the moisture barrier layer is overlapped onto and at least partially sealed to itself to form a package.

The invention still further provides a method of producing a package which comprises forming a multilayer film by attaching at least one biodegradable polymer layer to a surface of a moisture barrier layer, optionally via an intermediate adhesive primer layer; positioning the multilayer film to form a package where the moisture barrier layer is overlapped onto and sealed to itself to form said package and comprises the innermost layer of said package.

### BRIEF DESCRIPTION OF THE DRAWINGS

FIG. 1 is a plan-view, schematic representation of a multilayered article of the invention including a paper substrate, which article is useful as a book cover.

FIG. 2 is a plan-view, schematic representation of a multilayered film of the invention where the moisture barrier layer has clay particles dispersed therein, which film is useful for forming packages.

FIG. 3 is a cross-section view of a package formed from a multilayer film of the invention where the moisture barrier layer is sealed to itself.

### DETAILED DESCRIPTION OF THE INVENTION

The multilayer films and articles of the invention comprise at least one biodegradable polymer layer and are optionally attached to one or more high barrier moisture barrier layers to thereby increase the moisture barrier properties of the combined film structure. When present, the moisture barrier layer preferably has a sufficiently minimal thickness to produce multilayer structures that are preferably at least about 90% biodegradable, while achieving the desired moisture vapor transmission properties specified herein.

Suitable biodegradable polymeric materials used for producing the biodegradable polymer layers of the inventive multilayer films generally include all naturally produced biodegradable polymers, modified naturally produced biodegradable polymers or synthetically produced biodegradable polymers that are preferably derived from one or more polymers formed from naturally renewable resources. These include biodegradable aliphatic-aromatic copolymers, aliphatic polyesters having units formed from at least one of a lactide or a hydroxyacid having at least 4 carbon atoms, polyesters having units formed from succinic acid and an aliphatic diol, polyhydroxyalkanoates, and modified polyethylene terephthalate in which a portion of the terephthalate groups are substituted with at least one aliphatic diacid. Particularly useful biodegradable polymers include homopolymers and copolymers non-exclusively including PLA, PLA derivatives, polylactic acid/aliphatic polyester copolymer, polyglycolic acid polymers, polycaprolactone, polylactic acid/caprolactone copolymer, a terpolymer having units formed from glycolide, lactide and ε-caprolactone, polyesteramide, polyhydroxybutyrate, poly(3-hydroxybutyric acid), poly(3-hydroxybutyrate-co-3-hydroxyhexanoate), polyhydroxybutyrate-hydroxyvalerate copolymer, polybutylene succinate, poly(butylene succinate/adipate), polybutylene succinate-co-adipate-co-terephthalate, poly(caprolactone-butyrene succinate), polyester carbonate, poly(butylene succinate/carbonate), polyethylene succinate, polyethylene succinate adipate copolymer, poly(butylene adipate/terephthalate), polyethylene terephthalate copolymer, polyethylene terephthalate-co-succinate, poly(tetramethylene adipate/terephthalate), polyethylene sebacate, polyvinyl alcohol, chitosan, chitosan/cellulose polymers, cellulose acetate based polymers, thermoplastic starch-based and denatured starch-based polymers, polymers formed from other polysaccharides and proteins, copolymers or terpolymers of 1,4-butanediol, succinic acid, adipate and lactic acid, and combinations of the above. Preferred are polymers having a number average molecular weight of 1000 Mn or more, more preferably from about 1000 Mn to 500,000 Mn and most preferably from about 1000 Mn to about 100,000, depending on the polymer.

Biodegradable polymers are well known in the art and are widely commercially available. Well known useful biodegradable polymers non-exclusively include BIOMAX® modified polyethylene terephthalate polymers commercially available from E. I. du Pont de Nemours and Company of Wilmington, DE; ECOFLEX® petroleum-based aliphatic-aromatic copolymers commercially available from BASF of Germany; ECOVIO® polylactic acid containing polymers from BASF; MATER-BI® starch-based polymers commercially available from Novamont of Italy; NATUREWORKS® PLA polymers commercially available from NatureWorks LLC of Minnetonka, MN; EVLON® PLA polymers commercially available from BI-AX International Inc. of Ontario, Canada; LACEA® PLA polymers commercially available from Mitsui Chemicals Inc. of Japan; GS PLA™ polymers and BIOGREEN™ commercially available from Mitsubishi Chemical Corp. of Japan; CELGREEN™ polymers commercially available from Daicel Chemical Industries, LTD. of Japan; VYLOECOL® polylactic acid polymers commercially available from Toyobo Co. LTD. of Japan; BIONELLE™ polymers commercially available from Showa Highpolymer Co., LTD. of Japan; LUNARE™ polymers commercially available from Nippon Shokubai of Japan; and MOWIOL® and KURARAY POVAL® polymers commercially available from Kuraray Co., LTD. of Japan. Most preferred biodegradable polymers are polylactic acid polymers and polymers that are 100% bio-based materials, meaning that they are completely produced from annually renewable natural resources rather than petroleum-based resources.

In the preferred embodiment of the invention, the biodegradable polymer layer has a preferred base weight of from about 15.0 grams/m² to 60 g/m², more preferably from about 15.0 g/m² to 35.0 g/m². More particularly, the biodegradable polymer layer preferably comprises a polylactic acid layer having the following properties, wherein a 48 gauge (ga), 15.5 g/m² (gsm) layer is the most preferred:

| Film (in²/lb) | Yield (in²/lb) | GSM | oz/yd² | lb/ream | |
|---|---|---|---|---|---|
| 48 ga PLA | 45,400 | 15.5 | 0.46 | 9.5 | Lowest |
| 200 ga PLA | 11,350 | 62.0 | 1.84 | 38.0 | Highest |
| 48 ga PLA | 45,400 | 15.5 | 0.46 | 9.5 | Most Preferred |

The biodegradable polymer layer is optionally attached to one or more moisture barrier layers. The application of a high barrier coating to one or two sides of a biodegradable polymer film substrate provides significant gas and moisture barrier property enhancement as well as the added advantage of excellent heat sealing characteristics by using the coating as a heat sealant material. A moisture barrier coating applied to one or two sides of the biodegradable polymer film also results in a significant reduction in the noise level observed on deformation of the film compared to other film structures formed from annually renewable materials, enhancing their desirability for use as flexible film packages, such as pet food bags.

As used herein, a moisture barrier layer comprises a thermoplastic polymer layer having a moisture vapor transmission rate (MVTR) of from about 0.5 grams/100 in² (645.2 cm²) per day to about 45 g/100in² per day, more preferably from about 4 g/100 in² per day to about 35 g/100in² per day, and most preferably from about 10 g/100in² per day to about 30 g/100in² per day, as determined by the procedure set forth in ASTM F1249. The minimum coating weight to achieve these MVTR requirements is 0.07 lb/ream for an in-line processed, biaxially oriented layer, and 1.2 lb/ream for a regular, off-line coating.

Suitable moisture barrier layers having these moisture barrier properties non-exclusively comprise polyvinylidene chloride (PVdC), polyvinyl alcohol (PVOH), polyvinyl acetate (PVA), polyolefins including polyethylenes and polypropylene, polyamides, extrudable grade ethylene vinyl acetate (EVA), extrudable grade ethylene acrylic acid (EAA), ethylene vinyl alcohol copolymers (EVOHs) and combinations thereof, such as a polyamide/EVOH/polyamide coextrusion. Most preferably, the moisture barrier layer comprises a polyvinylidene chloride polymer. Moisture barrier layers achieving the above perm values may have a coating weight of from about 0.05 lb/ream to about 5.0 lb/ream, more preferably from about 0.07 lb/ream to about 2.5 lb/ream to achieve the above perm values and to produce a multilayer film that is at least 90% biodegradable. In a most preferred embodiment of the invention, the moisture barrier layer comprises a polyvinylidene chloride layer having the following properties, wherein a 1.0 lb/ream (ppr) film is the most preferred:

| Film (in²/lb) | Yield (in²/lb) | GSM | oz/yd² | lb/ream | |
|---|---|---|---|---|---|
| 0.2 ga PVdC | 4,320,000 | 0.16 | 0.0048 | 0.05 | Lowest |
| 20 ga PVdC | 86,400 | 8.1 | 0.24 | 5.0 | Highest |
| 4 ga PVdC | 432,000 | 1.63 | 0.048 | 1.0 | Most Preferred |

When present, the moisture barrier layer may optionally be attached to the biodegradable polymer layer via an intermediate adhesive primer layer. The adhesive primer layer may be applied either directly onto the biodegradable polymer layer or onto the moisture barrier layer by any appropriate means in the art, such as by coating. Each adhesive layer described herein, including the adhesive primer layer and all adhesive tie layers, may comprise any suitable adhesive material as would be determined by one skilled in the art. Suitable adhesives non-exclusively include polyurethanes, epoxies, ethylene vinyl acetate copolymer, polyesters, acrylics, anhydride modified polyolefin and blends thereof. Modified polyolefin compositions have at least one functional moiety selected from the group consisting of unsaturated polycarboxylic acids and anhydrides thereof. Such unsaturated carboxylic acid and anhydrides include maleic acid and anhydride, fumaric acid and anhydride, crotonic acid and anhydride, citraconic acid and anhydride, itaconic acid an anhydride and the like.

Preferably, the adhesive primer layer is a one or two component urethane. Preferred urethane based adhesives are commercially available, for example, from Henkel Technologies, based in Düsseldorf, Germany, including polyurethanes commercially available from the Liofol Company (a division of Henkel Technologies) under the trademark TYCEL®.

Each adhesive primer layer or adhesive tie layer described herein has a preferred coating weight of about 0.5 lb/ream to about 6 lb/ream, more preferably from about 1.0 lb/ream to about 4.0 lb/ream. More particularly, the adhesive layer preferably has the following properties, wherein a 1.5 lb/ream (ppr) film is the most preferred:

| Coating Weight (lb/ream) | lb/ream | GSM | Oz/yd² | |
|---|---|---|---|---|
| 0.5 ppr adhesive | 0.5 | 0.8 | 0.02 | Lowest |
| 6 ppr adhesive | 6.0 | 10 | 0.29 | Highest |
| 1.5 ppr adhesive | 1.5 | 2.4 | 0.07 | Most Preferred |

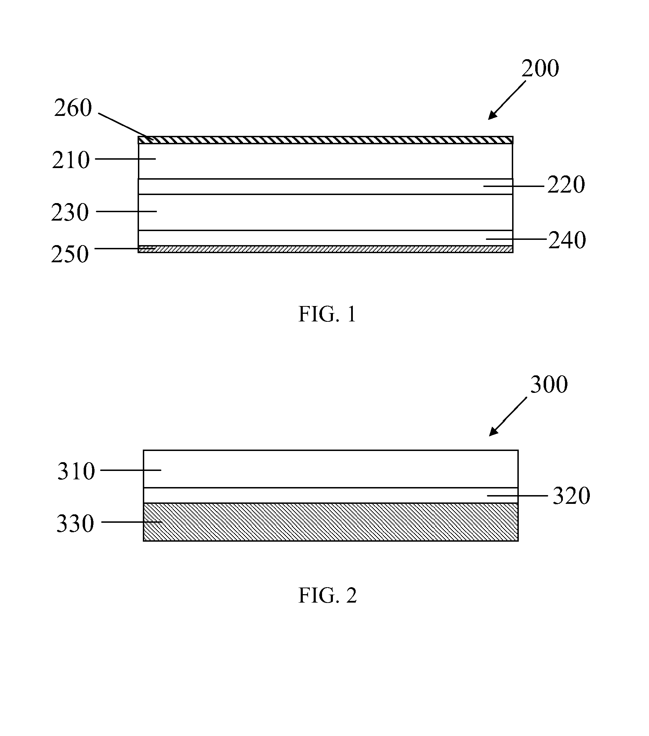

In one embodiment of the invention, illustrated in FIG. 1 (not drawn to scale), a multilayer article 200 is provided that is particularly useful as a biodegradable book covering. In this embodiment, article 200 includes a biodegradable polymer layer 210 attached on one side to a curl resistant outer protective layer 260, and attached on another side to a first surface of an optional moisture barrier layer 230 via an optional intermediate adhesive primer layer 220. The curl resistant outer protective layer 260 preferably comprises a substantially transparent polymer layer having good scratch, heat, abrasion, puncture and mar resistance, and excellent chemical resistance, as well as a low curl tendency. Outer protective layer 260 may also include one or more scratch resistant additives such as a silica or a wax, including a polyethylene wax or a polypropylene wax, also providing outer protective layer 260 with good slip properties. Particularly, the incorporation of a scratch resistant additive preferably decreases the coefficient of friction ("COF") of layer 260 to have a medium slip of from above 0.5 to about 0.4, or a high slip of less than about 0.2. This adjustable COF will enhance film throughput for manufacturers. The scratch resistant, high slip additive preferably comprises from about 0.5% to about 5% by weight of the outer protective layer, more preferably from about 1% to about 3% by weight and most preferably from about 1% to about 2% by weight. A preferred polymeric composition for a protective layer is illustrated in Examples 6 and 7. The outer protective layer 260 also preferably has low gloss properties. Such is described in Examples 6 and 7, where the outer protective layer described therein provides the multilayer film with a matte surface finish.

As illustrated in FIG. 1, multilayer article 200 further includes a paper substrate 250 that is attached to a second surface of the moisture barrier layer 230 via an adhesive layer 240. Adhesive layer 240 and adhesive primer layer 220 may comprise any of the adhesive materials listed previously and may be applied by any appropriate means in the art, such as by coating, onto a surface of either adjacent layer. Paper substrate 250 may comprise any paper-based substrate that is commonly used as cover stock for books, including standard paper and paperboard (e.g. cardboard). It is known that paper will absorb moisture from its surrounding atmosphere quickly, depending on the relative humidity and the temperature of the air with which it is in contact. As a consequence of the absorption and desorption of water by the paper, there may be an unwanted dimensional changes due to swelling and contraction of the paper resulting from changes in moisture content. Prior attempts to solve this problem have been to laminate a polymeric film such as polyethylene, polypropylene or polyester to an underlying paper sheet for protecting the paper surface. However, due to the hydroscopic properties of these materials, such coated paper structures have shown a tendency to curl. This is particularly a problem when the coated paper structures comprise book coverings.

The inventive multilayer structures combining both a low curl/curl resistant outer protective layer 260 and a biodegradable polymer layer 210 have overcome this problem. Curling resistance properties may be evaluated by making an 8 inch by 8 inch (20.32 cm x 20.32 cm) perpendicular cross cut through the layer and measuring the degree of curl with a protractor. Using this Curl Test method, the outer protective layer 260 will preferably curl less than about 90 degrees, more preferably less than about 45 degrees and most preferably less than about 30 degrees at a humidity of from about 10% to about 90% relative humidity. Suitable curl resistant materials non-exclusively include thermoplastic polymers such as polyamides, polyesters, acrylic polymers, polyurethanes, epoxies or a combination thereof. Most preferably, the outer protective layer comprises an acrylic polymer, an epoxy, a polyurethane, or a combination thereof.

In a typical application, layer 210, optional layer 220, layer 230 and layer 260 are formed into an integrally bonded structure that is subsequently thermally laminated to a layer of paper and cut to form a book cover. This is done by methods commonly known in the art. Additionally, the multilayer structures 200 have a preferred tensile strength of about 50,000 psi (344.7 MPa) or less, more preferably about 40,000 psi (275.8 MPa) or less, and most preferably about 30,000 psi (206.8 MPa) or less as determined by the ASTM D882 testing method; and an Elmendorf Tear Strength of about 20 grams or less, more preferably about 15 grams or less and most preferably about 10 grams or less in the machine direction, in the transverse direction, or in both the machine direction and the transverse direction, as determined by the ASTM D1922-06a Elmendorf tear testing method. Further, each of the biodegradable polymer layer and the outer protective layer preferably individually exhibit an Elmendorf Tear Strength of about 20 grams or less, more preferably about 15 grams or less and most preferably about 10 grams or less in the machine direction, in the transverse direction, or in both the machine direction and the transverse direction, as determined by the ASTM D1922-06a Elmendorf tear testing method.

In this second embodiment, it may also be desirable to provide article 200 with a matte, satin or high gloss finish by incorporating one or more particulate fillers into optionally moisture barrier layer 230 or outer protective layer 260. For example, it is known to produce polymer sheets having different surface finishes by uniformly melt blending particulate refractory fillers such as silica or alumina into a thermoplastic polymer before the polymer is formed into a film. For example, a refractory filler is blended with the polymer precursor to break up any agglomerates, and then the precursor is polymerized. These tailored surface finishes make the films of the invention highly attractive for use as book covers or other articles when laminated to paper or paperboard substrates.

The key factor defining the type of surface finish is the gloss level of the film. A matte surface finish will have a gloss level of about 20 or less as determined by the ASTM D2457 gloss measurement method, more preferably about 10 or less for the present invention. A satin surface finish will have a gloss level of from about 20 to about 70 as determined by ASTM D2457, more preferably about 50 to about 70 for the present invention. A high gloss surface finish will have a gloss level of from about 70 to about 180 as determined by ASTM D2457, more preferably about 100 to about 180 for the present invention.

There are several factors that affect the gloss level, including the loading amount of the filler, the filler particle size, as well as the surface area and density of the moisture barrier layer. Typically, a 2% loading will give a satin finish, but may also give a matte finish. If the moisture barrier layer coating is thick (e.g. coating weight is 2.0 lb/ream and above), and if the filler has a lower density then the moisture barrier polymer (e.g. silica filler density is usually below 1 gm/cm³; the moisture barrier polymers typically have a density above 1 gm/cm³), a significant portion of the filler can move to upper surface during heating and drying of the barrier layer. This would give a high filler concentration at the barrier layer surface and create matte finish.

For purposes of this invention, a refractory filler is a material having the ability to retain its physical shape and chemical identity when subjected to high temperatures, i.e. at least as high as the melting point of the polymer forming the moisture barrier layer. Suitable fillers include inorganic fillers, including those of a granular nature, as well as mixtures thereof. Preferred fillers include glass, silica glass, ceramic, asbestos, aluminum oxide, silicon carbide, gypsum, as well as other inorganic and carbon fibers. Useful fillers also include wollastonite, sericite, asbestos, talc, mica, clay, kaolin, bentonite, and silicates, including alumina silicate, and potassium titanate. Other granular fillers include metal oxides, such as alumina, silica, magnesium oxide, zirconium oxide, titanium oxide, titania, zinc oxide, carbonates such as calcium carbonate, magnesium carbonate, and dolomite, sulfates including calcium sulfate and barium sulfate, boron nitride, glass beads, silicon carbide, as well as other materials not specifically denoted here. These fillers may be hollow, for example glass microspheres, silane balloons, carbon balloons and hollow glass fibers. Preferred refractory fillers are refractory oxides and most preferably refractory metal oxides. More particularly, preferred fillers are silica, alumina, zinc oxide, titania, chromium oxide, germanium oxide and other mixed metal oxides, kaolin, calcined kaolin minerals, pyrophyllite, calcined pyrophyllite, montmorillonite, calcined montmorillonite, mica and mixtures thereof with silica being the most preferred filler.

To provide a matte surface as determined by the ASTM D2457 gloss measurement method, the refractory filler may be present in the optional moisture barrier layer 230 or outer protective layer 260, or both, in an amount of from about 2 weight percent to about 30 weight percent and more preferably from about 5 weight percent to about 20 weight percent based on the weight of the layer. To provide a satin surface as determined by ASTM D2457, the refractory filler is preferably present in layer 230 and/or layer 260 in an amount of from about 2 weight percent to about 30 weight percent and more preferably from about 5 weight percent to about 15 weight percent based on the weight of the layer. To provide a gloss surface as determined by ASTM D2457, the refractory filler is preferably present in layer 230 and/or layer 260 in an amount of from about 1 weight percent to about 10 weight percent and more preferably from about 1 weight percent to about 3 weight percent based on the weight of the layer. As explained above, several factors affect the gloss level, including the loading amount of the filler, the filler particle size, as well as the surface area and density of the moisture barrier layer. Accordingly, these ranges are properly overlapping and the means to achieve the different various surface finishes would be readily determined by one skilled in the art. Additionally, as is well known in the art, a low level of filler may be used to improve mar and scratch resistance without affecting the gloss level.

The refractory filler preferably has an average particle size in the range of from about 0.5 µm to about 10 µm and more preferably from about 1.0 µm to about 3.0 µm. In a particularly preferred embodiment, the particle size of the filler has a bimodal distribution wherein from 0.1% to about 25% and preferably from about 10% to about 20 % of the refractory filler has an average particle size in the range of from about 4 µm to about 5 µm and the balance of the refractory filler has an average particle size in the range of from about 1.5 µm to about 2 µm. The fillers may be treated with silane, titanate or another coupling agent.

In another embodiment of the invention, illustrated in FIG. 2 (not drawn to scale), a multilayer article 300 is provided that is particularly useful as a biodegradable packaging material. In this embodiment, article 300 includes a biodegradable polymer layer 310 attached to a first surface of a moisture barrier layer 330 via an optional intermediate adhesive primer layer 320, wherein the moisture barrier layer 330 comprises a nanocomposite. As used herein, a nanocomposite comprises a thermoplastic polymer blended with a nanometer scale clay, also known as a nanoclay. Nanocomposites and methods for their formation are well known in the art. The nanoclay may comprise a material such as montmorillonite, pyrophyllite, hectorite, vermiculite, beidilite, saponite, nontronite, fluoromica or a combination thereof. The thermoplastic polymer forming layer 330 may comprise any of the materials specified above for layer 230, but preferably comprises a heat sealable polymer, such as heat sealable polyolefins, polyamides, polyvinylidene chloride, acrylic polymers, extrudable grade ethylene vinyl acetate (EVA), extrudable grade ethylene acrylic acid (EAA), and combinations thereof. In the preferred embodiment of the invention, said clay comprises from about 0.5 to about 5.0 percent by weight of said nanocomposite, more preferably from about 3.0 to about 5.0 percent by weight of said nanocomposite. The thermoplastic polymer preferably comprises from about from about 95.0 to about 99.5 percent by weight of said nanocomposite, more preferably from about 95.0 to about 97.0 percent by weight of said nanocomposite.

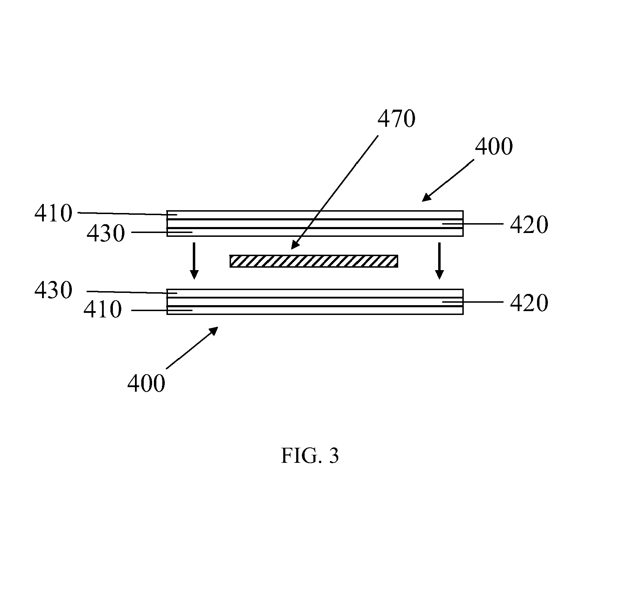

Illustrated in FIG. 3 (not drawn to scale) is a schematic representation of a biodegradable package 400 including a biodegradable polymer layer 410 attached to a moisture barrier layer 430 via an adhesive primer layer 420. As shown in the figure, the package is preferably formed by overlapping the moisture barrier layer 430 onto itself and at least partially sealing it to itself, forming an enclosure suitable for containing a product 470, such as produce or pet food, where layer 430 comprises the innermost layer of said package. Package 400 may also be formed into a balloon, where the package contains a gaseous product, such as air or helium. A balloon may be formed by conventional means in the art and would not necessarily require the overlapping of layer 430 onto itself. In one method of manufacture of package 400, a single multilayer film is used and the film is folded onto itself to form an overlap having an open top edge and open side edges, followed by sealing the top and side edges of the overlap to themselves, typically with heat and pressure, to form a package. Such techniques are conventionally understood by those skilled in the art. In an alternate method, two multilayer composites are used, preferably of similar or identical construction, and are overlapped such that layer 430 comprises the innermost layer of said package. While it is most preferable that the overlapping layers are heat sealed to each other, it should be understood that any alternate method may be used to attach the layers as would be conventionally understood by one skilled in the art, such as with an adhesive material such as polyurethanes, pressure sensitive adhesives (PSAs), epoxies and the like.

Most preferably, moisture barrier layer 430 comprises a heat sealable polymer allowing it to be heat sealed to itself without the use of an adhesive material between the overlapping portions of the layer 430. The heat sealing process forms a strong interlayer bond between film surfaces. Heat sealing techniques are well known in the art, and involve the application heat to melt and fuse portions of the polymer layer together. Heat sealing temperatures will vary depending on the properties of the particular moisture barrier layer. However, not all polymeric films are heat sealable. In general, heat seal temperatures preferably range from about 150°C to about 400°C, more preferably from about 250 °C to about 350 °C, and heat seal pressures range from about 10 psi to about 100 psi, more preferably from about 40 psi to about 100 psi.

In the packages of the invention, moisture barrier layer 430 may or may not comprise a nanocomposite including a nanometer scale clay. In addition, it should be understood that biodegradable packages might also be formed in this manner utilizing multilayer structure 200 or 300 described herein, with or without layers identified as optional. The films may further have printed indicia on or between layers. Such printing is typically on an internal surface of the structure and methods of application are well known in the art. As used herein, printed indicia will typically be applied onto the biodegradable polymer layer.

Supplementing any of the additives described above, each biodegradable polymer layers, moisture barrier layers, adhesive layers and other polymer layers described herein may optionally also include one or more conventional additives whose uses are well known to those skilled in the art. The use of such additives may be desirable in enhancing the processing of the compositions as well as improving the products or articles formed therefrom. Examples of such include: oxidative and thermal stabilizers, lubricants, release agents, flame-retarding agents, oxidation inhibitors, oxidation scavengers, dyes, pigments and other coloring agents, ultraviolet light absorbers and stabilizers, organic or inorganic fillers including particulate and fibrous fillers, reinforcing agents, nucleators, plasticizers, as well as other conventional additives known to the art. Such may be used in amounts, for example, of up to about 10% by weight of the overall composition. Representative ultraviolet light stabilizers include various substituted resorcinols, salicylates, benzotriazole, benzophenones, and the like. Suitable lubricants and release agents include stearic acid, stearyl alcohol, and stearamides. Exemplary flame-retardants include organic halogenated compounds, including decabromodiphenyl ether and the like as well as inorganic compounds. Suitable coloring agents including dyes and pigments include cadmium sulfide, cadmium selenide, titanium dioxide, phthalocyanines, ultramarine blue, nigrosine, carbon black and the like. Representative oxidative and thermal stabilizers include the Period Table of Element's Group I metal halides, such as sodium halides, potassium halides, lithium halides; as well as cuprous halides; and further, chlorides, bromides, iodides. Also, hindered phenols, hydroquinones, aromatic amines as well as substituted members of those above mentioned groups and combinations thereof. Exemplary plasticizers include lactams such as caprolactam and lauryl lactam, sulfonamides such as o,p-toluenesulfonamide and N-ethyl, N-butyl benylnesulfonamide, and combinations of any of the above, as well as other plasticizers known to the art.

Although each layer of the multilayer film structure may have a different thickness, the thickness of the biodegradable polymer layer is preferably from about 10 µm to about 50 µm, more preferably from about 12 µm to about 25 µm, and most preferably from about 12 µm to about 15 µm. The thickness of the moisture barrier layer is preferably very thin, preferably from about 0.03 µm to about 6 µm, more preferably from about 0.3 µm to about 3.0 µm, and more preferably about 0.3 µm to about 1.5 µm. In each embodiment, it is most preferred that the moisture barrier layer have the lowest possible thickness for the selected moisture barrier polymer that is sufficient to achieve the perm values specified herein while also producing multilayer structures that are preferably at least about 90% biodegradable. Accordingly, in most embodiments the moisture barrier layer will have a thickness of about 4 µm or less, but will typically comprise at least about 0.6% of the total multilayer film thickness. The thickness of the each adhesive primer layer and adhesive tie layer is preferably from about 1 µm to about 30 µm, more preferably from about 3 µm to about 20 µm, and most preferably from about 5 µm to about 15 µm. The thickness of the curl resistant outer protective layer is preferably from about 10 µm to about 50 µm, more preferably from about 12 µm to about 25 µm, and most preferably from about 12 µm to about 15 µm. The paper substrate may have a wide variety of thicknesses depending on the required thickness for the particular application. The overall multilayer films of the invention (excluding any paper substrate) have a preferred total thickness of from about 400 µm to about 650 µm, more preferably from about 425 µm to about 625 µm and most preferably from about 450 µm to about 600 µm. While such thicknesses are preferred, it is to be understood that other film thicknesses may be produced to satisfy a particular need and yet fall within the scope of the present invention.

The multilayer films of this invention may be produced by conventional methods useful in producing multilayer films, including coating, extrusion/coextrusion, lamination, gravure coating, extrusion coating and extrusion lamination techniques. In a typical coextrusion process, the polymeric material for the individual layers are fed into infeed hoppers of a like number of extruders, each extruder handling the material for one or more of the layers. The melted and plasticated streams from the individual extruders are directly fed to a multi-manifold die and then juxtaposed and combined into a layered structure or combined into a layered structure in a combining block and then fed into a single manifold or multi-manifold co-extrusion die. The layers emerge from the die as a single multiple layer film of polymeric material. After exiting the die, the film is cast onto a first controlled temperature casting roll, passes around the first roll, and then onto a second controlled temperature roll. The controlled temperature rolls largely control the rate of cooling of the film after it exits the die. Additional rolls may be employed. In another method, the film forming apparatus may be one that is referred to in the art as a blown film apparatus and includes a multi-manifold circular die head for bubble blown film through which the plasticized film composition is forced and formed into a film bubble that may ultimately be collapsed and formed into a film. Processes of coextrusion to form film and sheet laminates are generally known. Typical coextrusion techniques are described in U.S. patents 5,139,878 and 4,677,017. One advantage of coextruded films is the formation of a multilayer film in a one process step by combining molten layers of each of the film layers, as well as any other optional film layers, into a unitary film structure.

Alternately, the individual layers may first be formed as separate layers and then laminated together under heat and pressure with or without intermediate adhesive layers. Lamination techniques are well known in the art. Typically, laminating is done by positioning the individual layers on one another under conditions of sufficient heat and pressure to cause the layers to combine into a unitary film. Typically the layers are positioned on one another, and the combination is passed through the nip of a pair of heated laminating rollers by techniques well known in the art. Lamination heating may be done at temperatures ranging from about 100°F (37.78°C) to about 300°F (148.9°C), preferably from about 150°F (65.56 °C) to about 250°F (121.1°C), and more preferably at from about 150°F (65.56 °C) to about 200°F (93.33°C), at pressures ranging from about 20 psi (137.9 kPa) to about 80 psi (551.6 kPa), more preferably from about 40 psi (275.8 kPa) to about 60 psi (413.7 kPa), for from about 10 seconds to about 3 minutes, preferably from about 20 seconds to about 1 minute.

Also suitable are conventional coating techniques or other non-extrusion deposition methods, such as extrusion coating. Extrusion coating is the preferred method for applying a moisture barrier layer having a thickness of about 4 µm or less onto the biodegradable polymer layer, because the layer is too thin to be effectively extruded into a film at that thickness. Extrusion coating is a process where a molten polymer is applied onto a solid support and passes on a cooling cylinder at the contact of which the polymer adheres to the support.

In order to improve interlayer adhesion, the biodegradable polymer layer and/or the moisture barrier layer and/or the other layers, may optionally be subjected to a corona treatment. A corona treatment is a process in by which a layer of material is passed through a corona discharge station giving the surface of the layer a charge that improves its ability to bond to an adjacent layer. If conducted on the moisture barrier layer, corona treatment is preferably conducted after attachment to the biodegradable polymer layer. Preferably, the layer or layers are subjected to about 0.5 to about 3 kVA-min/m² of corona treatment. More preferably, the corona treatment level is about 1.7 kVA-min/m². Suitable corona treatment units are available from Enercon Industries Corp., Menomonee Falls, Wis. and from Sherman Treaters Ltd, Thame, Oxon, UK. Preferably the surface dyne level of the corona treated layer or layers is above 36 dynes, more preferably above 42 dynes, and most preferably above 50 dynes.

In the preferred embodiment of the invention, the moisture barrier layer and/or biodegradable polymer layer are uniaxially or biaxially oriented. Most preferably, both the moisture barrier layer and biodegradable polymer layer are biaxially oriented films. Preferably, in the present invention the moisture barrier layer and/or biodegradable polymer layer are films oriented to a draw ratio of from 1.5:1 to 5:1 biaxially in each of its machine (longitudinal) direction and transverse direction. For the purposes of the present invention the term draw ratio is an indication of the increase in the dimension in the direction of draw. Preferably, both the moisture barrier layer and the biodegradable polymer layer are simultaneously biaxially oriented. For example, in an in-line coating process, the moisture barrier layer and the biodegradable polymer layer are first attached to each other and then the combined plasticized layers are biaxially oriented together in both the machine and transverse directions at the same time. This results in dramatic improvements in strength and toughness properties. In an off-line coating process, the biodegradable polymer layer is typically biaxially oriented prior to application of the moisture barrier layer (e.g. by extrusion coating). In this case, only the biodegradable polymer layer is oriented.

The moisture vapor transmission rate (MVTR) of the multilayered films of the invention may be determined via the procedure set forth in ASTM F1249. In the preferred embodiment, the overall multilayer film according to this invention has a MVTR of from about 20 or less g/100 in²/day (310 g/m²/day) of the overall film at 37.8°C and 100% relative humidity (RH), preferably from about 4 to about 20 g/100 in²/day (62 to about 310 g/m²/day) of the overall film, and more preferably from about 10 to about 20 g/100 in²/day (155 to about 310 g/m²/day) of the overall film, as determined by water vapor transmission rate measuring equipment available from, for example, Mocon of Minneapolis, MN.

In view of the various embodiment of the invention, most preferred article structures include: a) book coverings comprising high slip matte finishing protective layer/PLA film/adhesive/PVdC /adhesive/paper; or high slip matte finishing protective layer/PLA Film/adhesive/Paper; and b) packaging films comprising biaxially oriented PLA/optional printed indicia/adhesive/PVdC or PVdC nanocomposite. While the multilayer films of the invention are particularly useful for the formation of such structures described herein, other biodegradable articles may be produced therefrom and their use is not intended to be limiting.

The following non-limiting examples serve to illustrate the invention.

### INVENTIVE EXAMPLES 1-3 and COMPARATIVE EXAMPLES 1-3

For Inventive Examples 1-3 and Comparative Examples 1-3, a PVdC coating (DARAN® 8730, commercially available from Owensboro Specialty Polymers, LLC of Owensboro, Kentucky) was applied on both CAPRAN® EMBLEM™ 2500 polyamide film (commercially available from Honeywell International Inc. of Morristown, NJ) and EVLON® 25 micron biaxially oriented PLA film (commercially available from BI-AX International, Inc.) at dry coating weights of 0.13 lb/ream, 1.7 lb/ream, and 2.4 lb/ream and cured for 2 weeks. WVTR data was recorded based on ASTM E96 50%RH wet cup method and were compared to a control sample. The test results are summarized in Table 1 below.

**TABLE 1**

| Example | Sample Structures | MVTR (gram/ 100in²/day) |
|---|---|---|
| EMBLEM^{™} Control | 1 mil (25.4 µm) CAPRAN® EMBLEM^{™} 2500 | 12 -14 |
| Biax PLA Control | 1 mil EVLON® Biax PLA | 21 |
| Comp. 1 | 1 mil CAPRAN® EMBLEM^{™} 2500 with 0.13 ppr PVdC | 3 - 5 |
| 1 | 1 mil EVLON® Biax PLA with 0.13 ppr PVdC | 3 - 5 |
| Comp. 2 | 1 mil CAPRAN® EMBLEM^{™} 2500 with 1.7 ppr PVdC | 0.32 |
| 2 | 1 mil EVLON® Biax PLA with 1.7 ppr PVdC | 0.27 |
| Comp. 3 | 1 mil CAPRAN® EMBLEM^{™} 2500 with 2.4 ppr PVdC | 0.18 |
| 3 | 1 mil EVLON® Biax PLA with 2.4 ppr PVdC | 0.18 |

The above results illustrate that the multilayer biodegradable films of the invention have a substantially reduced moisture permeability due to the application of a moisture barrier layer (i.e. PVdC) of 1.7 ppr or greater. The inventive films achieve a similar performance to a nylon/PVdC film, but with the added benefit of biodegradability.

### INVENTIVE EXAMPLES 4-5 and COMPARATIVE EXAMPLES 4-5

A composition for forming a matte outer protective layer was produced from a solution, identified herein as "solution A," having 21.6% total solids content. Solution A consisted of a mixture of 5.9% UCAR® VAGH vinyl resin powder (high molecular weight, hydroxyl-functional, partially-hydrolyzed vinyl chloride/vinyl acetate resin, commercially available from Dow Chemical Company of Midland, MI), 3.0% RESIMENE® 797 (a methylolated melamine formaldehyde resin, commercially available from Monsanto Chemical Company of St. Louis, MO), 4.9% NACURE® 155 (crosslinking catalyst, commercially available from King Industries, Inc. of Norwalk, CT), 9.6% of BECKOSOL® 12-093 alkyd resin (commercially available from Richold, Inc. of Durham, NC), 2.9% SYLOID® 378 silica (commercially available from W. R. Grace & Co.), 2.0% SYLYSIA® 310 silica (commercially available from Yugenkaisha Y.K.F. Corporation of Japan), 1.0% ACRYLOID® B67 acrylic resin (commercially available from Rohm and Haas Company of Philadelphia, PA), and 69.5% solvent mix of propyl acetate and toluene.

DARAN® 8730 was applied onto 1 mil EVOLON® PLA film at 0.13 lb/ream to reduce the PLA moisture barrier to equivalent to 60 ga CAPRAN® EMBLEM™ 1500. Solution A was then applied to both the PVdC coated 1 mil EVOLON® PLA and plain CAPRAN® EMBLEM™ 1500 at dry coating weights of 0.5 lb/ream and 1.0 lb/ream using a conventional gravure coating method with oven drying at a 300°F (148.9 °C). The adhesion, ASTM D2457 60° gloss level, heat resistance, and methyl ethyl ketone (MEK) resistance were recorded to determine the film performance. The results are summarized in Table 3 below. The resulting film also achieved high scratch resistance and high slip properties.

**TABLE 3**

| Example | Structure | Matte Dry Coating Weight (lb/ream) | Adhesion | ASTM D2457 60° Gloss | Heat Resistance at 300°F, 10 seconds coating to coating | MEK resistance |
|---|---|---|---|---|---|---|
| Comp. 6 | 1 mil CAPRAN® EMBLEM^{™} 1500 with Matte finish | 0.3 | Destructive | 35 -50 (satin) | Pass | Pass 10 wipes |
| Comp. 7 | | 1.0 | Destructive | 6 -10 (matte) | Pass | Pass 10 Wipes |
| 6 | 1 mil EVLON® PLA/0.13 ppr PVdC with Matte finish | 0.3 | Destructive | 35 -50 | Pass | Pass 10 wipes |
| 7 | | 1.0 | Destructive | 6 -10 | Pass | Pass 10 Wipes |

While the present invention has been particularly shown and described with reference to preferred embodiments, it will be readily appreciated by those of ordinary skill in the art that various changes and modifications may be made without departing from the spirit and scope of the invention. It is intended that the claims be interpreted to cover the disclosed embodiment, those alternatives that have been discussed above and all equivalents thereto.

## Claims

1. A multilayer article comprising, in order:
a) a curl resistant outer protective layer;
b) a biodegradable polymer layer;
c) an optional intermediate adhesive primer layer;
d) an optional moisture barrier layer having a moisture vapor transmission rate of from about 0.5 grams/100 in² (645.16 cm²) per day to about 45 g/100in² per day;
e) an adhesive tie layer; and
f) a paper substrate.

2. The multilayer article of claim 1 wherein both the moisture barrier layer and the intermediate adhesive primer layer are present.

3. The multilayer article of claim 1 wherein said outer protective layer is formed from one or more polyamides, polyolefins, polyesters, acrylic polymers, polyurethanes, epoxies, or a combination thereof.

4. The multilayer article of claim 1 wherein said outer protective layer further comprises at least one scratch resistant additive comprising a silica, a polyethylene wax or a polypropylene wax.

5. A book cover formed from the multilayer article of claim 1.

6. A multilayer film comprising, in order:
a) a biodegradable polymer layer;
b) an optional intermediate adhesive primer layer; and
c) a moisture barrier layer having a moisture vapor transmission rate of from about 0.5 grams/100 in² (645.16 cm²) per day to about 45 g/100in² per day; said moisture barrier layer comprising a thermoplastic polymer combined with a nanometer scale clay.

7. The multilayer film of claim 6 wherein at least one of said biodegradable polymer layer and said moisture barrier layer comprises a uniaxially or biaxially oriented film.

8. A package formed from a multilayer film, the film comprising, in order:
a) a biodegradable polymer layer;
b) an optional intermediate adhesive primer layer; and
c) a moisture barrier layer having a moisture vapor transmission rate of from about 0.5 grams/100 in² (645.16 cm²) per day to about 45 g/100in² per day; wherein the moisture barrier layer is overlapped onto and at least partially sealed to itself to form a package.

9. The package of claim 8 wherein said moisture barrier layer comprises a thermoplastic polymer combined with a nanometer scale clay.

10. A method of producing a package which comprises forming a multilayer film by attaching at least one biodegradable polymer layer to a surface of a moisture barrier layer, optionally via an intermediate adhesive primer layer; positioning the multilayer film to form a package where the moisture barrier layer is overlapped onto and sealed to itself to form said package and comprises the innermost layer of said package.
